# EUROPEAN PATENT APPLICATION

(11) **EP 4 779 275 A1**
(43) Date of publication of application: **22.07.2026**
(21) Application number: 26151226.3
(22) Date of filing: 12.01.2026
(51) Int. Cl.: G01J 5/02, G01J 5/20

(54) **INFRARED RADIATION SENSOR WITH IMPROVED MECHANICAL RELIABILITY**

(30) Priority: 21.01.2025 IT 202500000972
(71) Applicant: STMicroelectronics International N.V., 1228 Plan-les-Ouates, Geneva (CH)
(72) Inventor: FERRARI, Giacomo, 20864 AGRATE BRIANZA (MB) (IT); CARMINATI, Roberto, 20864 AGRATE BRIANZA (MB) (IT); MERLI, Massimiliano, 20864 AGRATE BRIANZA (MB) (IT); DANIELE, Filippo, 20864 AGRATE BRIANZA (MB) (IT)
(74) Representative: Studio Torta S.p.A.

(57) **Abstract**

Sensor (12), of the micro-electromechanical type, for detecting infrared, IR, radiation, comprising: a main body (32) with a buried cavity (34), and a frame portion (42) facing the cavity (34); a suspended mass (38) that is suspended in the cavity (34), has an active area in a first plane (XY) and comprises at least one TMOS (20) configured to detect IR radiation; and an elastic group (40) extending in the cavity (34) between the suspended mass (38) and the frame portion (42), to elastically couple the suspended mass (38) to the frame portion (42). The elastic group (40) comprises at least a first (41a), a second (41b), a third (41c) and a fourth (41d) spring, the springs (41a-41d) being of the folded type and being coupled to the suspended mass (38) at respective vertices of the suspended mass (38) in the first plane (XY), and each spring (41a-41d) has a cross-section with an area that depends on the active area of the respective suspended mass (38).

## Description

### TECHNICAL FIELD

The present invention relates to an infrared radiation sensor with improved mechanical reliability, in particular comprising one or more TMOS. Furthermore, it relates to a measuring device for detecting infrared radiation, comprising the sensor.

### BACKGROUND

TMOS is a known microelectromechanical system (MEMS) device based on a micromachined transistor that is suspended in a cavity, is thermally insulated from the surrounding environment, and in use receives and measures infrared (IR) radiation. The resulting temperature variation is transduced into an electrical signal that defines the output of the TMOS.

For illustrative purposes, TMOS may be used in applications such as detecting the presence of people, by measuring the emission of IR radiation. For example, an IR camera may comprise multiple pixels, each comprising one or more TMOS, which work independently of each other to obtain the desired spatial resolution of the image to be acquired.

To operate effectively, TMOS requires to be thermally insulated from the substrate in which the cavity housing it is provided and to be able to detect IR radiation from the surrounding environment.

To achieve this, the mass that accommodates the TMOS is suspended in the cavity through elastic elements (e.g., springs). In order to minimize the thermal coupling between the suspended mass and the substrate, caused by the presence of these elastic elements, the latter usually have a reduced conductance obtained by designing the elements as long and with a small section. For example, several known solutions have the elastic elements that at least partially surround the suspended mass (e.g., each of them faces multiple side walls of the suspended mass, that are adjacent to each other); this allows the path of the elastic elements to be lengthened without having to correspondingly enlarge the cavity. Furthermore, for the same reason, these elements are usually formed with materials that have a low thermal conductivity, such as oxides (e.g., SiO2 since it is widely available in the CMOS technology processing).

However, these design choices lead to a device that has an extremely reduced mechanical reliability. In fact, it is known that the fragile elastic elements of the device may easily be damaged in case of events such as inadvertent drops in portable applications.

As a result, current solutions are not able to ensure the mechanical reliability of the TMOS without worsening its thermal performance.

For instance, in the field of IR detection, IR cameras are known which have a plurality of suspended masses in a same cavity, with a matrix arrangement. In detail, a suspended frame grid is also suspended in the cavity and fixed to the substrate in such a way as to be integral therewith. The grid defines a plurality of openings having the suspended masses respectively accommodated therewithin, that are elastically coupled to the suspended frame grid through the respective elastic elements that at least partially surround the suspended masses (e.g., each suspended mass has two springs, each facing two respective adjacent sides of the suspended mass such that, in top view, the suspended mass is surrounded on all its sides by the springs).

This known IR camera is weak from the mechanical point of view due to the previously described pixel design choices, that aim to optimize thermal insulation.

Furthermore, this IR camera has constraints related to the spatial resolution of the target to be detected, that pushes towards the use of larger suspended masses. However, larger dimensions of the suspended masses cause their warpage due to intrinsic stresses of the thin films used to form the suspended masses. Warpage in turn may be responsible for failures during the pixel manufacturing process, further reducing the reliability of the IR camera.

Document US2024302219A1 is directed to the field of thermal sensing devices and, more particularly, to a process flow for forming thermally isolated MOS sensors (TMOS) incorporating mechanical stoppers to increase robustness to mechanical shocks.

Document EP3933360A1 relates to the technical field of infrared detection, in particular, an infrared detector.

### SUMMARY

The aim of the present invention is to provide a sensor and a measuring device that overcome the drawbacks of the prior art.

According to the present invention, a sensor and a measuring device are provided as defined in the annexed claims that form an integral part of the present description.

### BRIEF DESCRIPTION OF THE DRAWINGS

For a better understanding of the present invention, a preferred embodiment is now described, purely by way of non-limiting example, with reference to the attached drawings, wherein:
- Figure 1 is a block diagram of a measuring device for detecting infrared radiation, according to one embodiment;
- Figure 2 is a cross-sectional view of a sensor of the measuring device of Figure 1, according to one embodiment;
- Figure 3 is a top view of details of the sensor of Figure 2, according to one embodiment;
- Figure 4 is a cross-sectional view of a detail of the sensor of Figure 2, according to the embodiment of Figure 3;
- Figure 5 is a cross-sectional view of a spring of the sensor of Figure 2, according to one embodiment;
- Figure 6 is a top view of details of the sensor of Figure 2, according to a further embodiment;
- Figure 7 is a cross-sectional view of a detail of the sensor of Figure 2, according to the embodiment of Figure 6;
- Figure 8 is a top view of details of the sensor of Figure 2, according to a different embodiment;
- Figure 9 is a cross-sectional view of a detail of the sensor of Figure 2, according to the embodiment of Figure 8; and
- Figure 10 is a top view of details of the sensor of Figure 2, according to a further embodiment.

In particular, the Figures are shown with reference to a triaxial Cartesian system defined by an X-axis, a Y-axis and a Z-axis, orthogonal to each other.

In the following description, elements common to the different embodiments have been indicated with the same reference numbers.

### DETAILED DESCRIPTION OF THE INVENTION

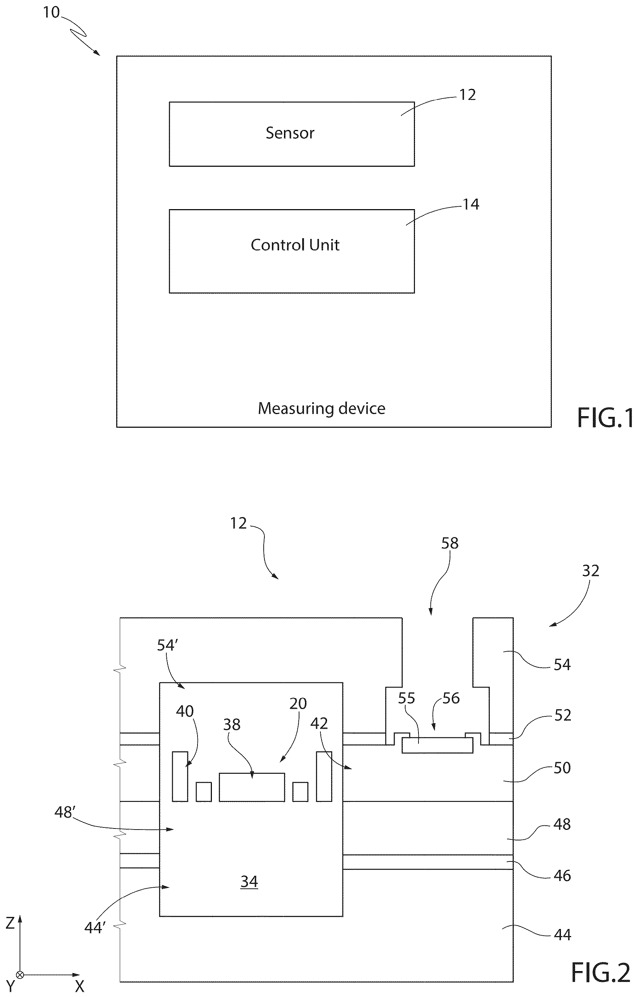

Figure 1 shows a measuring device 10 for detecting infrared (IR) radiation.

For illustrative and non-limiting purposes, the measuring device 10 may be an IR image acquisition device such as an IR video camera. Nevertheless, other examples and applications may similarly be considered; for example, the measuring device 10 may be a detection sensor configured to detect IR data (e.g., to measure the IR radiation present in an environment, to detect the presence or movement of people or animals, etc.).

The measuring device 10 comprises a sensor 12 and a control unit 14, operationally coupled to each other.

The sensor 12 is configured to measure the IR radiation that hits it and to generate one or more corresponding detection signals indicative of this measurement. In the following, for simplicity, a detection signal is considered, for illustrative purposes.

In particular, the detection signal is an electrical signal, for example of an analog or digital type, with a value dependent on the amount of IR radiation measured.

In fact, as better described below with reference to Figures 2-4, the sensor 12 comprises one or more thermally isolated metal-oxide semiconductor (MOS) (TMOS) transistors 20. In the following, the case of a single TMOS 20 is exemplarily considered, nevertheless it becomes apparent that the sensor 12 may comprise a plurality of TMOS 20 arranged side by side to each other, for example in such a way as to define a matrix of TMOS 20.

The TMOS 20 is a field effect transistor typically used in sensor applications to measure local temperature variations caused for example by absorption of IR radiation. In fact, the absorption of IR radiation induces a temperature variation in the TMOS 20, that in turn causes the generation of charge carriers at the conductive channel of the TMOS 20 and, therefore, a corresponding variation in an output current of the TMOS 20; the latter may then be related to the measured temperature variation, in such a way as to have a measurement of the absorbed IR radiation.

With reference again to Figure 1, the control unit 14 is an electronic unit (such as a microprocessor, a dedicated processor, a CPU, an FPGA, etc.) coupled, for example electrically coupled, to the sensor 12.

The control unit 14 is configured to receive the detection signal from the sensor 12 and, as a function of the detection signal and in a manner known per se, generate output data.

The nature of the output data depends on the specific application of the measuring device 10. For example, the output data may be an IR image in case the measuring device 10 is an IR camera.

In order to perform the required actions, the control unit 14 may comprise, in a manner not shown or described in detail, as it is known per se, analog-to-digital converters, filtering stages, amplification stages, comparison stages, data storage modules (e.g., memories, such as non-volatile memories), etc.

Figure 2 shows a cross-section of the sensor 12.

As may be seen in Figure 2, the sensor 12 has a main body 32 with a cavity (or chamber) 34, buried in the main body 32.

The cavity 34 is fluidically insulated from the external environment. In detail, the air in the cavity 34 is of a controlled type in terms of pressure and composition. For example, the air in the cavity 34 has a standard composition (e.g., it is pure nitrogen or mixtures of nitrogen and other gases such as argon, to simulate real air) and a pressure that is predefined and reduced (in particular, lower than about 10 Pa). This allows the thermal conductivity of the air within the cavity 34 to be reduced, thus increasing the thermal insulation of the one or more TMOS 20.

In the embodiment of Figure 2, a suspended mass 38 is suspended in the cavity 34 through an elastic group 40 that elastically couples the suspended mass 38 to the main body 32 (in particular, to a frame portion 42 of the main body 32). Although Figure 2 exemplarily shows a single suspended mass 38, in other embodiments better described below a plurality of suspended masses 38 may be present, suspended in the cavity 34 through respective elastic groups 40.

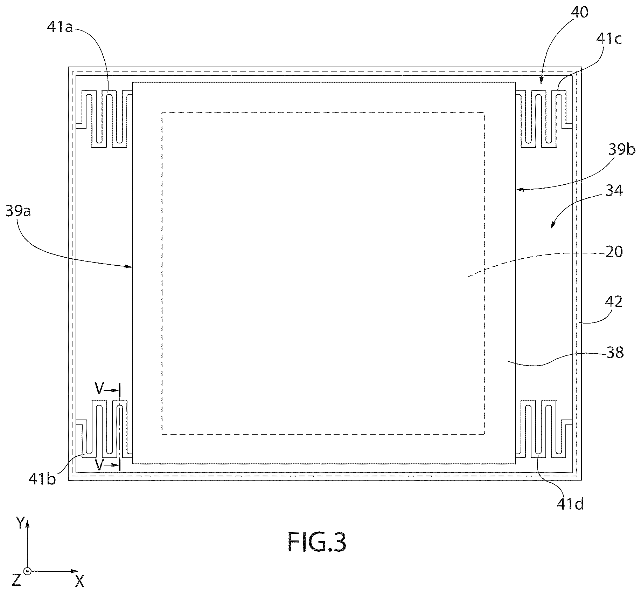

The elastic group 40 comprises elastic elements (hereinafter, springs), in particular folded springs such as planar serpentine springs. The shape and arrangement of the springs is better described below with reference to Figure 3.

As a result, the suspended mass 38 is defined by a plate elastically suspended on the cavity 34.

The suspended mass 38 comprises the one or more TMOS 20 previously mentioned.

The specific structure of the TMOS 20 is analogous to known TMOS structures, for example to the structure disclosed in the document EP4428508A1 of the same Applicant.

In particular, the main body 32 may be formed by the following elements, superimposed on each other along the Z-axis: a lower cap 44, a first bonding layer 46, a working substrate 48, a multilayer body 50, a second bonding layer 52, an upper cap 54.

The working substrate 48 has a working cavity 48', traversing the working substrate 48 along the Z-axis.

The lower cap 44 is fixed, for example by bonding through the first bonding layer 46, to a lower surface of the working substrate 48.

Optionally, the lower cap 44 has a respective working cavity 44' that extends along the Z-axis in the lower cap 44, starting from an upper surface of the lower cap 44 and without reaching a lower surface of the lower cap 44. The working cavity 44' is aligned along the Z-axis with the working cavity 48' and is in direct fluidic communication with the latter through a through opening of the first bonding layer 46.

The multilayer body 50 extends on the upper surface of the working substrate 48 and defines the frame portion 42, the suspended mass 38 and the elastic group 40. In detail, the parts of the multilayer body 50 that are superimposed along the Z-axis on the working substrate 48 define the frame portion 42, while the parts of the multilayer body 50 that are suspended over the working cavities 48' define the suspended mass 38 and the elastic group 40.

In greater detail and in a manner not shown in Figure 2, the frame portion 42, the elastic group 40 and the suspended mass 38 may comprise one or more semiconductor layers of semiconductor material (e.g., silicon), one or more insulating layers of insulating material (e.g., of silicon oxide) and one or more conductive layers (for example, of metal such as aluminum).

The upper cap 54, for example transparent to IR radiation, is fixed, for example by bonding through the second bonding layer 52, to an upper surface of the frame portion 42.

Optionally, the upper cap 54 has a respective working cavity 54' that extends along the Z-axis in the upper cap 54, starting from a lower surface of the upper cap 54 and without reaching an upper surface of the upper cap 54. The working cavity 54' is aligned along the Z-axis with the working cavity 48' and is in direct fluidic communication with the latter through a through opening of the second bonding layer 52 and through the empty regions of the multilayer body 50 at the suspended mass 38 and the elastic group 40.

The working cavity 48', the empty regions of the multilayer body 50 at the suspended mass 38 and the elastic group 40 and, if present, the working cavities 54' and 44' together define the cavity 34. As a result, the frame portion 42, the working substrate 48 and part of the caps 44 and 54 together define side walls of the cavity 34, while the remaining parts of the caps 44 and 54 define a lower wall and an upper wall of the cavity 34, respectively.

As shown in Figure 2, the sensor 12 may also comprise one or more contact pads 56, for example a plurality thereof. In the example of Figure 2 only one contact pad 56 is shown, nevertheless it becomes apparent that the number of contact pads 56 may vary based on design requirements.

In detail, in Figure 2 the contact pad 56 is lateral to the cavity 34, i.e. it is arranged at its side along the X-axis. Nevertheless, it becomes apparent that other arrangements may similarly be considered.

In greater detail, the contact pad 56 is formed by a conductive layer 55 (of conductive material, in particular metal such as aluminum) that extends in a contact cavity 58 formed in the upper cap 54, starting from the upper surface of the upper cap 54 and until exposing a part of the upper surface of the multilayer body 50, where the contact pad 56 is located. As a result, the contact pad 56 faces the outside of the sensor 12, so that it may be electrically contacted through external electrical connections to the sensor 12, not shown.

The contact pad 56 is in electrical connection with the one or more TMOS 20, for example through electrical connections, not shown in the Figure, that extend in the multilayer body 50.

The manufacturing process for forming the sensor 12 is analogous to the sequence of steps disclosed in the document EP4428508A1 of the same Applicant.

Figure 3 shows in top view the cavity 34, the suspended mass 38 and the elastic group 40, according to the embodiment considered so far.

In the embodiment of Figure 3, the suspended mass 38 exemplarily comprises a single TMOS 20. Nevertheless, it becomes apparent that a larger number of TMOS 20 may similarly be considered, as better discussed below.

In top view, the area of the suspended mass 38 defines an active area of the sensor 12. In other words, the active area corresponds to the part of the sensor 12 that, in the XY-plane, is heated in use by the impinging IR radiation, in a substantially homogeneous manner, allowing the TMOS 20 to measure the corresponding temperature variation.

Furthermore, in top view, the area of the cavity 34 defines a total area of the sensor 12. In other words, the total area is the area delimited, in the XY-plane, by the frame portion 42. As a result, the total area corresponds to the sum, in the XY-plane, of the area of the elements of the sensor 12 that are suspended in the cavity 34 (e.g., suspended mass 38 and elastic group 40) and the area of the empty spaces between these suspended elements of the sensor 12 (e.g., the spaces between the turns of the springs 41a-41d, between the springs 41a-41d and the suspended mass 38, between the suspended mass 38 and the frame portion 42, etc.).

For instance, a ratio between the active area and the total area of the sensor 12 may be comprised between about 50% and about 90% and for example be equal to about 80%. Furthermore, the active area of the suspended mass 38 may be comprised between about 7200 µm² and about 13000 µm² and for example be equal to about 11500 µm², i.e. it may be greater than about 600% with respect to the active area of the currently known solutions.

As shown in Figure 3, the elastic group 40 comprises four springs 41a-41d, in particular of the serpentine type, facing each other two by two on the sides of the suspended mass 38 that are opposite to each other along the X-axis. These springs 41a-41d are arranged at the vertices of the suspended mass 38.

In other words, the suspended mass 38, exemplarily shown here with a quadrangular shape in top view (for example square shape), has a first side (or first side wall) 39a and a second side (or second side wall) 39b, opposite to each other along the X-axis and facing the frame portion 42 through the cavity 34. A first pair of springs 41a and 41b faces the first side 39a, while a second pair of springs 41c and 41d faces the second side 39b.

Each of the springs 41a-41d is coupled to the suspended mass 38', 38" at a respective vertex of the latter, in top view.

Alternatively, a plurality of springs may also be considered for each side 39a and 39b, for example three or more springs for each side 39a and 39b.

For instance, the springs 41a-41d have first ends fixed, in the embodiment of Figure 3, to the frame portion 42 (here exemplarily to surfaces of the frame portion 42 that are opposite to each other along the X-axis) and second ends fixed to the respective vertices of the suspended mass 38.

This arrangement of the springs 41a-41d significantly reduces rotations, and in general unwanted movements, of the suspended mass 38.

Nevertheless, other shapes and arrangements of the elastic group 40 may similarly be considered, in a manner known per se.

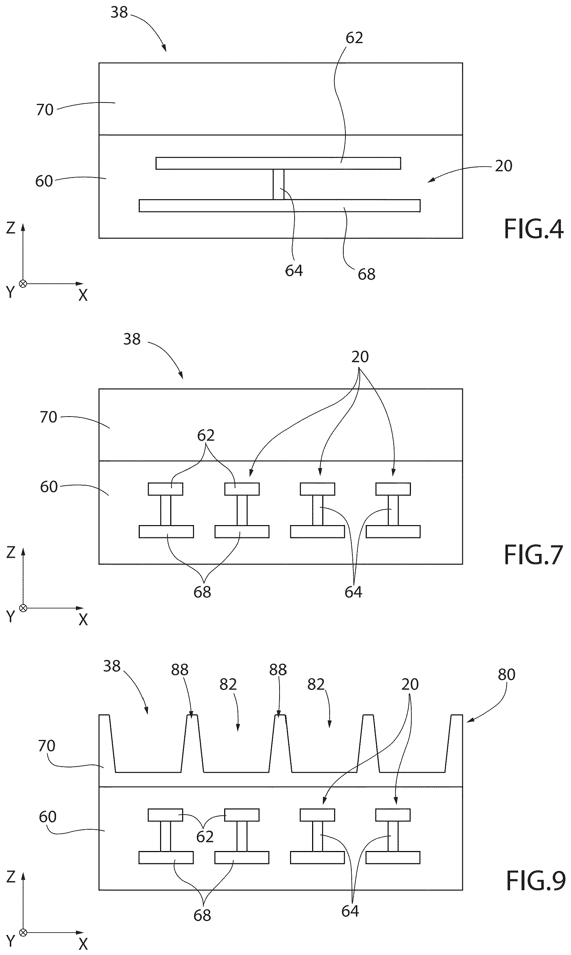

Figure 4 shows in detail a cross-sectional view of the suspended mass 38.

As shown in Figure 4, the suspended mass 38 comprises a main body formed by a device insulating layer 60 and a support insulating layer 70, of insulating material (e.g., of silicon oxide) and superimposed on each other along the Z-axis. For example, Figure 4 shows the support insulating layer 70 over the device insulating layer 60; nevertheless, other embodiments may be similarly considered where for example the device insulating layer 60 extends over the support insulating layer 70.

The device insulating layer 60 accommodates one or more semiconductor layers 68 of semiconductor material (e.g., silicon or polysilicon) and one or more metallizations 62 of conductive material (in particular metal such as aluminum). Furthermore, one or more conductive vias 64 may be accommodated in the device insulating layer 60 to electrically connect the semiconductor layers 68 and the metallizations 62 to each other.

In detail, the device insulating layer 60, the semiconductor layers 68 and the metallizations 62 form the TMOS 20, in a manner known per se and therefore not described in detail here.

The support insulating layer 70 is fixed to the device insulating layer 60 (e.g., it is integral therewith) and improves its stiffness, eliminating or at least reducing the warpage of the suspended mass 38. In fact, the increase in thickness along the Z-axis of the suspended mass 38, due to the presence of the support insulating layer 70, increases the overall mechanical stiffness of the suspended mass 38, thus reducing the influence thereon of mechanical stresses that would otherwise cause it to bend.

In the embodiment of Figure 4, the support insulating layer 70 has a continuous cross-section along the Z-axis (both in the XZ-plane and in the YZ-plane), i.e. it has a thickness along the Z-axis that is substantially uniform throughout its extension.

For instance, the thickness along the Z-axis of the device insulating layer 60 may be comprised between about 1 µm and about 3 µm and for example be equal to about 2 µm. Furthermore, the thickness along the Z-axis of the support insulating layer 70 may be comprised between about 0.5 µm and about 2.5 µm and for example be equal to about 1.5 µm.

Furthermore, in a manner not shown since it is known per se, the springs 41a-41d comprise a main body of insulating material (e.g., silicon oxide) and electrical connections (hereinafter also referred to as routing connections) of conductive material (e.g., polysilicon or metal such as aluminum), that are buried in the main body so as to be electrically insulated from the cavity 34.

The routing connections extend within the respective springs 41a-41d along their serpentine path, in such a way as to extend continuously between the first ends and the second ends of the springs 41a-41d and thus create a conductive path through the springs 41a-41d.

The routing connections are electrically connected to the TMOS 20 (e.g., to the metallizations 62) in such a way as to electrically connect the latter to the contact pad 56. This allows the acquisition of the detection signal from the TMOS 20.

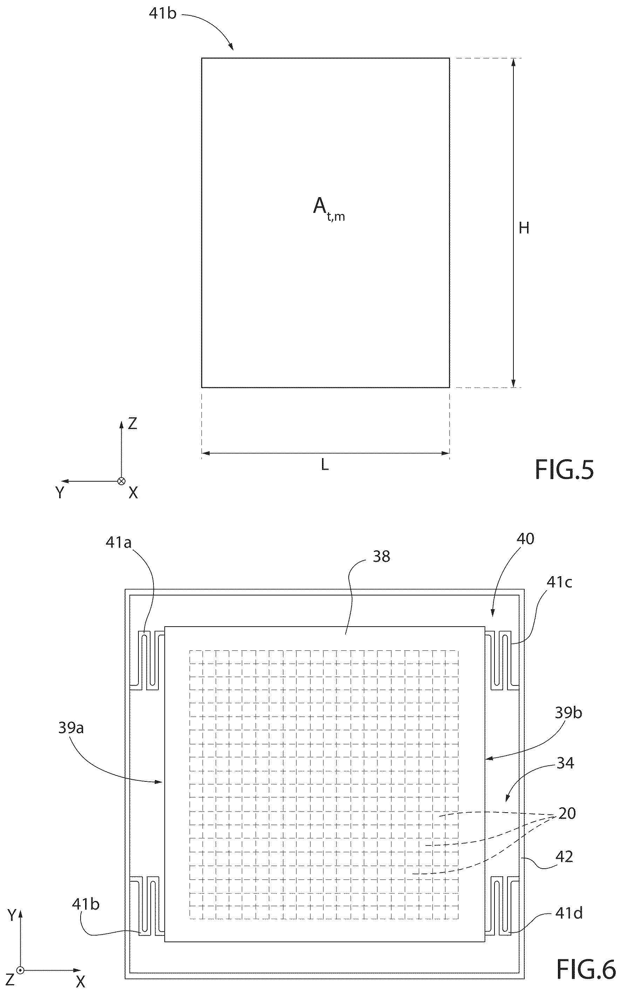

Figure 5 shows in more detail a cross-section of one of the springs 41a-41d, here exemplarily the spring 41b, along the section line V-V shown in Figure 3.

In detail, each spring 41a-41d has a cross-section that is substantially constant and uniform along its entire serpentine path, and equal to each other.

The cross-section may have any closed polygonal shape, for example it has a quadrangular shape such as a square or rectangular shape (Figure 5 shows exemplarily the case of the rectangular shape).

The cross-sectional area of each spring 41a-41d depends on, i.e. is correlated to, the active area of the seismic mass 38 coupled thereto (e.g., measured in the XY-plane). In other words, the cross-section of the springs 41a-41d is designed as a function of the active area of the seismic mass 38, in such a way as to satisfy a predefined relationship with the active area.

In particular, each spring 41a-41d is designed such that a ratio R1 between the active area (also indicated hereinafter as Aₐₜₜ) of the seismic mass 38 and the conductance g of the spring 41a-41d is maximized and in detail is greater than about 60 K·µm²/nW, for example equal to about 120 K·µm²/nW.

The conductance g of the spring 41a-41d is defined here as the ratio between a cross-sectional area A_{t,m} of the spring 41a-41d (i.e. the area of the spring 41a-41d in cross-section, for example in the YZ-plane) and a spring path length P (i.e. the length of the spring 41a-41d measured between the first and second ends along its serpentine path, therefore for example in the XY-plane), multiplied by an effective (or equivalent) thermal conductivity k_{eff} of the materials of the springs 41a-41d.

In detail, the conductance g of the springs 41a-41d is lower than about 200 nW/K, for example equal to about 75 nW/K.

In particular, the spring path length P is comprised between about 40 µm and about 120 µm and for example equal to about 90 µm.

Furthermore, the cross-sectional area A_{t,m} of the springs 41a-41d is defined in a manner known per se based on the chosen shape of the cross-section of the springs 41a-41d. For example, in case the cross-section of the springs 41a-41d is rectangular as in Figure 5 and has a width L measured along the Y-axis and a height (or thickness) H measured along the Z-axis, the cross-sectional area A_{t,m} is equal to the product of the width L and the height H. However, it becomes apparent that other calculation relationships may be used for other shapes of the cross-section.

In other words, R1=Aₐₜₜ/g, with g=_{keff}·A_{t,m}/P.

Furthermore, the cross-section of the springs 41a-41d may also have an aspect ratio AR lower than 1, in particular lower than about 0.9 and for example equal to about 0.6.

In detail, the aspect ratio AR is calculated in a manner known per se based on the chosen shape of the cross-section of the springs 41a-41d. For example, in case the cross-section of the springs 41a-41d is rectangular as in Figure 5, the aspect ratio AR is equal to the ratio between the width L and the height H. However, it becomes apparent that other calculation relationships may be used for other shapes of the cross-section.

Figure 6 shows in top view the cavity 34, the suspended mass 38 and the elastic group 40, according to a different embodiment of the sensor 12.

In the embodiment of Figure 6, the suspended mass 38 comprises a plurality of TMOS 20.

In detail, the TMOS 20 are arranged side by side to each other in top view and are aligned with each other, in groups, both along the X-axis and along the Y-axis in such a way as to form a matrix arrangement.

In detail, the TMOS 20 may be electrically connected in series with each other, in such a way as to increase the detection abilities of the sensor 12.

For purely illustrative purposes, it is possible to have N1xN2 TMOS 20 in the suspended mass 38, with N1 and N2 for example comprised between about 10 and about 30.

The structure and the arrangement of the components of the sensor 12 are not described in detail again, as they are completely analogous to what has been described so far, except for the plurality of TMOS 20.

Figure 7 shows in detail a cross-sectional view of the suspended mass 38 of Figure 6.

As shown in Figure 7, the suspended mass 38 has a structure completely analogous to that of Figure 4 and therefore it is not described in detail again, except for the fact that it comprises a plurality of TMOS 20. Here, four TMOS 20 are exemplarily shown, aligned along the X-axis and therefore lateral to each other.

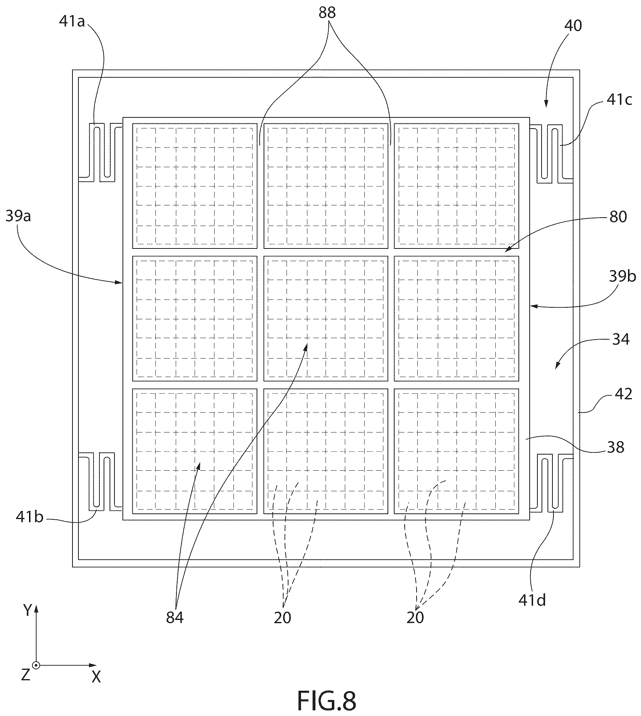

Figure 8 shows in top view the cavity 34, the suspended mass 38 and the elastic group 40, according to a further embodiment of the sensor 12.

In the embodiment of Figure 8, the suspended mass 38 comprises a support structure 80 having the shape of a grid (therefore also referred to as support grid).

In detail, the support structure 80, of the monolithic type, has a plurality of support elements 88 interconnected with each other in such a way as to define, in top view, a grid with a plurality of grid cavities 84. For example, the support elements 88 have an elongated and rectilinear shape, are fixed to each other and are arranged such that a first part thereof (with first support elements 88 parallel to each other and for example parallel to the X-axis) is orthogonal to a second part thereof (with second support elements 88 parallel to each other and for example parallel to the Y-axis), so as to define a grid and to laterally delimit the grid cavities 84 in a matrix arrangement. In detail, the grid cavities 84 are aligned with each other both parallel to the X-axis and parallel to the Y-axis in such a way as to define a matrix of grid cavities 84. Each grid cavity 84 is laterally delimited by respective portions of support elements 88 adjacent to each other. In the example of Figure 8, the grid cavities 84 extend within the seismic mass 38 starting from the upper surface of the latter. For example, the grid cavities 84 have substantially the same extension as each other in top view.

For purely illustrative purposes, the grid cavities 84 have a width, measured along the X- or Y-axis, comprised between about 20 µm and about 80 µm and a depth, measured along the Z-axis, comprised between about 0.5 µm and about 2.5 µm and a mutual distance, measured along the X- or Y-axis, comprised between about 2 µm and about 15 µm.

One or more respective TMOS 20 extend below each grid cavity 84. For example, in Figure 8 a plurality of TMOS 20 are shown for each grid cavity 84 (e.g., M1xM2 TMOS 20, with M1 and M2 comprised between about 1 and about 12).

Optionally, further TMOS 20 may also extend below the support elements 88, in a manner not shown in Figure 8.

The arrangement and the electrical connection of the TMOS 20 are entirely analogous to what has been previously described and are therefore not repeated here again.

As is evident, in this case the active area of the sensor 12 also comprises the area of the support structure 80.

Figure 9 shows in detail a cross-sectional view of the suspended mass 38 of Figure 8.

As shown in Figure 9, the suspended mass 38 has a structure completely analogous to that of Figure 7 and therefore not described in detail again, except for the fact of having the support insulating layer 70 with a discontinuous cross-section along the Z-axis (both in the XZ-plane and in the YZ-plane), in particular in a substantially periodic manner. In other words, the support insulating layer 70 has a thickness along the Z-axis that varies, in particular periodically, both along the X-axis and along the Y-axis.

In greater detail, the thickness of the support insulating layer 70 varies between a maximum thickness (e.g., the previously described thickness of the support insulating layer 70) and a minimum thickness (e.g., a zero thickness or in any case a thickness lower than the maximum thickness, for example comprised between about 0.5 µm and about 2.5 µm).

The parts of the support insulating layer 70 with maximum thickness define the support elements 88 of the support structure 80, while the parts of the support insulating layer 70 with minimum thickness define the grid cavities 84 of the support structure 80. For example, the grid cavities 84 are formed by selectively removing portions of the support insulating layer 70 through etching according to techniques known per se, starting from the upper surface of the support insulating layer 70 and without reaching the lower surface of the support insulating layer 70 (or, in a manner not shown, until reaching the lower surface of the support insulating layer 70 in such a way as to expose the upper surface of the underlying device insulating layer 60).

In Figure 9, a single TMOS 20 is exemplarily shown, placed below each grid cavity 84; nevertheless, it becomes apparent that the number of TMOS 20 below each grid cavity 84 may also be greater.

It has been verified that the sensor 12 of Figure 8 with the support structure 80 has warpage values analogous to those of the sensors 12 of Figures 3 and 6 but, compared to the latter, it significantly limits the increase in the response time of the sensor 12 (that, as is known, is directly proportional to the thermal capacity of the suspended mass 38 and is inversely proportional to the conductance of the springs 41a and 41b) by reducing the thermal capacity of the suspended mass 38 given that the overall volume of the latter is reduced. This allows the measuring speed of the sensor 12 to be increased.

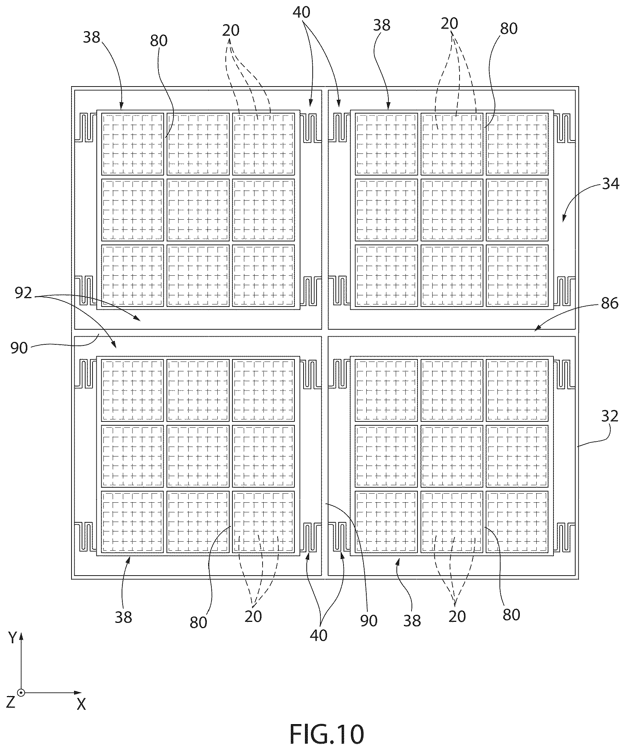

Figure 10 shows in top view a further embodiment of the sensor 12.

In the embodiment of Figure 10, the sensor 12 comprises a plurality of suspended masses 38.

The suspended masses 38 may be suspended in a same cavity 34 (as exemplarily shown in Figure 10 and described below) or they may be suspended each in a respective cavity 34 (in a manner not shown).

In the first case, the sensor 12 also comprises a suspended frame structure 86 that is fixed to the frame portion 42, is rigid and integral with the frame portion 42 and is suspended in the cavity 34. The suspended masses 38 are elastically coupled to the suspended frame structure 86 through the respective elastic groups 40.

In detail, the suspended frame structure 86 has a grid shape in top view (therefore it is also referred to as frame grid) .

In greater detail, the suspended frame structure 86, of the monolithic type, has a plurality of frame elements 90 interconnected with each other in such a way as to define, in top view, a grid with a plurality of through openings 92 that traverse the suspended frame structure 86 along the Z-axis. For example, the frame elements 90 have an elongated and rectilinear shape, are fixed to each other and are arranged such that a first part thereof (with first frame elements 90 parallel to each other and for example parallel to the X-axis) is orthogonal to a second part thereof (with second frame elements 90 parallel to each other and for example parallel to the Y-axis), so as to define a grid and to laterally delimit the through openings 92 with a matrix arrangement. In detail, the through openings 92 are aligned with each other both parallel to the X-axis and parallel to the Y-axis in such a way as to define a matrix of through openings 92. Each through opening 92 is laterally delimited by respective portions of frame elements 90 adjacent to each other. For example, the through openings 92 have substantially the same extension as each other in top view.

Each suspended mass 38 is accommodated within a respective through opening 92 and is elastically coupled to the frame elements 90 that laterally delimit the respective through opening 92. As a result, the suspended masses 38 that are placed at the edges of the matrix are elastically coupled to both the frame portion 42 and the suspended frame structure 86, while the remaining suspended masses 38 are elastically coupled directly only to the suspended frame structure 86.

The shape and arrangement of the suspended masses 38 are entirely analogous to what has been described so far (e.g., to the embodiments of Figures 3, 6 and 8), therefore they are not described again in detail. Figure 10 exemplarily shows the suspended masses 38 of Figure 8, nevertheless other embodiments of the suspended masses 38 may similarly be considered.

As is apparent, the total area of the sensor 12 of Figure 10 is also defined, in the XY-plane, by the area of the suspended frame structure 86. In other words, in this case the total area also covers the suspended frame structure 86, since the latter is also suspended on the cavity 34.

Furthermore, in this case each suspended mass 38 has the respective active area.

From an examination of the characteristics of the invention made according to the present invention, the advantages that it affords are evident.

In particular, the elastic groups 40 previously described allow the mechanical reliability of the sensor 12 to be increased while ensuring a ratio between the active area and the conductance of the springs equal to or greater than that of the known solutions, with a resulting advantage on the measure sensitivity of the sensor 12. In fact, the predefined ratio between the cross-section of the springs and the active area keeps the amount of IR radiation detected by the one or more TMOS 20 high and increases the mechanical reliability of the sensor 12.

In detail, the cross-section of the springs, thicker than the known solutions, generates greater reliability to out-of-plane movements, that translates into a higher overall stiffness of the springs. Furthermore, the use of folded springs allows to reduce the effective torsion and bending arm on the same springs.

For instance, it has been verified that, compared to the known solutions, the oscillation frequency of the suspended mass 38 along the Z-axis increases by almost 300%, the in-plane oscillation frequency of the suspended mass 38 increases by more than 200% and the reached temperature difference increases by more than 60%.

Furthermore, the use of the support insulating layer 70 allows to reduce the warpage that affects the known solutions (e.g., the mechanical reliability of the suspended mass 38 increases by more than 400% compared to the known solutions and the warpage remains lower than about 4 µm).

Finally, the use of the support structure 80 allows, compared to the solutions of Figures 4 and 7, to reduce the response time of the TMOS 20, while keeping substantially unchanged the reduction of the warpage (e.g., the response time of the TMOS 20 is reduced by more than 40% compared to the solutions of Figures 4 and 7).

Finally, it is clear that modifications and variations may be made to the invention described and illustrated here without thereby departing from the scope of the present invention, as defined in the attached claims.

For instance, the different embodiments described may be combined with each other to provide further solutions.

Furthermore, the support insulating layer 70 may also extend below the device insulating layer 60, for example when the IR radiation comes from below. In this case, the grid cavities 84 may extend in the suspended mass 38 starting from the lower surface of the support insulating layer 70.

## Claims

1. A sensor (12), of the micro-electromechanical type, for detecting infrared, IR, radiation,
the sensor (12) comprising:
- a main body (32) with a cavity (34) buried in the main body (32), the main body (32) comprising a frame portion (42) facing the cavity (34);
- a suspended mass (38) that is suspended in the cavity (34), has an active area (Aₐₜₜ) in a first plane (XY) and comprises at least one thermally isolated metal-oxide semiconductor, TMOS, transistor (20), configured to detect IR radiation; and
- an elastic group (40) extending in the cavity (34) between the suspended mass (38) and the frame portion (42), the elastic group (40) being configured to elastically couple the suspended mass (38) to the frame portion (42),
wherein the elastic group (40) comprises at least a first (41a), a second (41b), a third (41c) and a fourth (41d) spring, the springs (41a-41d) being of the folded type and being coupled to the suspended mass (38) at respective vertices of the suspended mass (38) in the first plane (XY), and
wherein each spring (41a-41d) has a cross-section with an area that depends on the active area (Aₐₜₜ) of the respective suspended mass (38).

2. The sensor according to claim 1, wherein each spring (41a-41d) defines a serpentine path and has a first end fixed to the frame portion (42) and a second end fixed to the suspended mass (38), the first and the second ends being opposite to each other along the serpentine path,
wherein a ratio (R1) between the active area (Aₐₜₜ) of the seismic mass (38) and a conductance (g) of each spring (41a-41d) is greater than 60 K·µm₂/nW,
the conductance (g) of each spring (41a-41d) depending on a ratio between the area (A_{t,m}) of the cross-section of the spring (41a-41d) and a spring path length (P) of the spring (41a-41d), measured between the first and the second ends along the serpentine path.

3. The sensor according to claim 1 or 2, wherein the suspended mass (38) has a first side wall (39a) and a second side wall (39b), opposite to each other along a first axis (X) of the first plane (XY) and facing respective sides of the frame portion (42) through the cavity (34),
wherein the first (41a) and the second (41b) springs face the first side wall (39a), and the third (41c) and the fourth (41d) springs face the second side wall (39b).

4. The sensor according to any of the preceding claims, wherein the cross-section of the springs (41a-41d) has an aspect ratio lower than 1.

5. The sensor according to any of the preceding claims, wherein the suspended mass (38) comprises a plurality of said TMOS (20), with a matrix arrangement and electrically connected in series to each other.

6. The sensor according to any of the preceding claims, wherein the suspended mass (38) comprises a device insulating layer (60) and a support insulating layer (70), of insulating material and superimposed on each other orthogonally to the first plane (XY),
wherein the device insulating layer (60) accommodates the at least one TMOS (20) and the support insulating layer (70) is integral with the device insulating layer (60) and has a cross-section that is continuous orthogonally to the first plane (XY).

7. The sensor according to claim 5, wherein the suspended mass (38) comprises a support structure (80) of a grid type and defining a plurality of grid cavities (84), the TMOS (20) being placed, orthogonally to the first plane (XY), over or under the grid cavities (84).

8. The sensor according to claim 7, wherein the suspended mass (38) comprises a device insulating layer (60) and a support insulating layer (70), of insulating material and superimposed on each other orthogonally to the first plane (XY),
wherein the device insulating layer (60) accommodates the TMOS (20) and the support insulating layer (70) is integral with the device insulating layer (60) and has a cross-section that is discontinuous orthogonally to the first plane (XY), the support insulating layer (70) defining said support structure (80).

9. The sensor according to any of the preceding claims, wherein a ratio between the active area of the suspended mass (38) and a total area in the first plane (XY) of the cavity (34) is comprised between 50% and 90%.

10. The sensor according to any of the preceding claims, wherein the sensor (12) comprises a plurality of said suspended masses (38), suspended in the cavity (34), and a respective plurality of said elastic groups (40),
the sensor (12) further comprising a suspended frame structure (86), of a grid type, that is fixed to the frame portion (42), is integral with the frame portion (42), is suspended in the cavity (34) and has a plurality of through openings (92) with a matrix arrangement and that traverse the suspended frame structure (86) orthogonally to the first plane (XY),
wherein the suspended masses (38) extend in the respective through openings (92) and are elastically coupled to the suspended frame structure (86) through the respective elastic groups (40).

11. A measuring device (10) for detecting infrared, IR, radiation, comprising:
a sensor (12) according to any of the preceding claims, the sensor (12) being configured to generate at least one detection signal indicative of the detected IR radiation; and
a control unit (14) operatively coupled to the sensor (12) and configured to receive the at least one detection signal and measure the IR radiation based on the at least one detection signal.
